# EUROPEAN PATENT APPLICATION

(11) **EP 3 702 229 A1**
(43) Date of publication of application: **02.09.2020**
(21) Application number: 20158345.7
(22) Date of filing: 19.02.2020
(51) Int. Cl.: B60W 60/00, B60W 30/10, B60W 30/18, G01C 21/34, B60W 50/00

(54) **METHOD, DEVICE, AND TERMINAL APPARATUS FOR INVOKING AUTOMATIC DRIVING REFERENCE LINE**

(30) Priority: 20.02.2019 CN 201910127401
(71) Applicant: Baidu Online Network Technology (Beijing) Co., Ltd., Beijing 100085 (CN)
(72) Inventor: ZHU, Zhenguang, Beijing, Beijing 100085 (CN); LI, Hongye, Beijing, Beijing 100085 (CN); FU, Xiaoxin, Beijing, Beijing 100085 (CN); CHEN, Zhiyuan, Beijing, Beijing 100085 (CN)
(74) Representative: Schollweck, Susanne

(57) **Abstract**

A method, device and terminal apparatus for invoking an automatic driving reference line are provided according to embodiments of the disclosure. The method includes: acquiring (S10) lane information of a current lane where a vehicle is located; calculating (S20) an automatic driving reference line of the current lane according to the lane information of the current lane; invoking (S30) lane information of a switching lane according to a topological relation between the current lane and the switching lane; and calculating (S40) an automatic driving reference line of the switching lane according to the automatic driving reference line of the current lane and the lane information of the switching lane. By using the method, the automatic driving reference lines of all the switching lanes can be calculated before the road is switched, and the automatic driving reference lines of the switching lanes can be invoked in an orderly manner, so that an automatic driving vehicle can switch the road freely with changes of a surrounding traffic flow and an environment in a complicated road network environment.

## Description

### TECHNICAL FIELD

The present application relates to a field of automatic driving technology, and in particular, to a method, device, and terminal apparatus for invoking an automatic driving reference line.

### BACKGROUND

An automatic driving reference line is a planned route calculated without any obstacles in a high-precision map, along which an automatic driving vehicle can travel to provide good feeling. Automatic driving reference line generation technology is the basic technology of automatic driving planning technology. However, in the face of complex road network topological relation, during the automatic driving, various road conditions cause the automatic driving vehicles to change lanes to other lanes. Before switching lanes, the driving reference line of the corresponding lane should be generated in advance to ensure the safety, reliability and feasibility of the automatic driving plan.

At present, the automatic driving reference line is usually planned in a single lane, and the automatic driving reference line can be obtained at the beginning of the program or by a simple sequential calculation with the running. However, the current generation method and scheduling method for automatic driving reference line are very simple, and can only meet the function of "patrol" automatic driving in simple road conditions, that is, driving in only one lane. This method cannot meet the requirement that an intelligent automatic driving vehicle should switch the lane freely with changes of a surrounding traffic flow and an environment in a complicated road network environment.

### SUMMARY

A method, device and a terminal apparatus for invoking an automatic driving reference line are provided according to embodiments of the present application, so as to at least solve the above technical problems in the existing technology.

In a first aspect, a method for invoking an automatic driving reference line is provided according to an embodiment of the disclosure, which includes:
acquiring lane information of a current lane where a vehicle is located;
calculating an automatic driving reference line of the current lane according to the lane information of the current lane;
invoking lane information of a switching lane according to a topological relation between the current lane and the switching lane; and
calculating an automatic driving reference line of the switching lane according to the automatic driving reference line of the current lane and the lane information of the switching lane.

In one implementation, before acquiring lane information of a current lane where a vehicle is located, the method further includes:
acquiring a road feasible area between places of departure and destination;
segmenting each road in the road feasible area to generate a plurality of road segments, each of the road segments including at least one lane.

In one implementation, the invoking lane information of a switching lane according to a topological relation between the current lane and the switching lane includes:
setting a priority of the switching lane according to the topological relation between the current lane and the switching lane; and
invoking the lane information of the switching lane in an order of the priority.

In one implementation, the setting a priority of the switching lane according to a topological relation between the current lane and the switching lane includes:
setting a priority of a lane on either side of the current lane to be higher than a priority of a lane at an end of the current lane.

In one implementation, the invoking the lane information of the switching lane in an order of the priority includes:
if the switching lane comprises the lane on either side of the current lane and the lane at the end of the current lane, first invoking lane information of the lane on either side of the current lane, and then invoking lane information of the lane at the end of the current lane.

In a second aspect, a device for invoking an automatic driving reference line is provided according to an embodiment of the disclosure, which includes:
a current lane information acquiring module, configured to acquire lane information of a current lane where a vehicle is located;
a current lane automatic driving reference line calculating module, configured to calculate an automatic driving reference line of the current lane according to the lane information of the current lane;
a switching lane information invoking module, configured to invoke lane information of a switching lane according to a topological relation between the current lane and the switching lane; and
a switching lane automatic driving reference line calculating module, configured to calculate an automatic driving reference line of the switching lane according to the automatic driving reference line of the current lane and the lane information of the switching lane.

In one implementation, the device further includes:
a road feasible area acquiring module, configured to acquire a road feasible area between places of departure and destination;
a road segmenting module, configured to segment each road in the road feasible area to generate a plurality of road segments, each of the road segments including at least one lane.

In one implementation, the switching lane information invoking module includes:
a switching lane priority setting unit, configured to set a priority of the switching lane according to the topological relation between the current lane and the switching lane; and
a switching lane information invoking unit, configured to invoke the lane information of the switching lane in an order of the priority.

In one implementation, the switching lane priority setting unit includes:
a priority setting sub-unit, configured to set a priority of a lane on either side of the current lane to be higher than a priority of a lane at an end of the current lane.

In one implementation, the switching lane information invoking unit includes:
a switching lane information invoking sub-unit, configured to, if the switching lane comprises the lane on either side of the current lane and the lane at the end of the current lane, first invoke lane information of the lane on either side of the current lane, and then invoke lane information of the lane at the end of the current lane.

In a third aspect, a terminal apparatus for invoking an automatic driving reference line is provided according to an embodiment of the present application, the functions thereof may be implemented by hardware, or by hardware executing corresponding software. The hardware or software includes one or more modules corresponding to the above functions.

In a possible embodiment, the terminal apparatus for invoking an automatic driving reference line includes a processor and a storage, the storage is configured to store a program for supporting the above method executed by the terminal apparatus for invoking an automatic driving reference line, the processor is configured to execute the program stored in the storage. The terminal apparatus for invoking an automatic driving reference line further includes a communication interface configured for communication between the terminal apparatus for invoking an automatic driving reference line and another apparatus or communication network.

In a fourth aspect, a computer-readable storage medium is provided according to an embodiment of the disclosure, which stores computer software instructions used by the device for invoking an automatic driving reference line, the computer software instructions include programs involved in execution of the above method for invoking an automatic driving reference line.

One of the above technical solutions has the following advantages or beneficial effects:
by using the method for invoking an automatic driving reference line according to the embodiment, the automatic driving reference lines of all the switching lane can be calculated before the current lane is switched, and the automatic driving reference lines of the switching lanes are acquired in an orderly manner, so that an automatic driving vehicle can switch the lane freely with changes of a surrounding traffic flow and an environment in a complicated road network environment.

The above summary is for the purpose of the specification only and is not intended to be limiting in any way. In addition to the illustrative aspects, embodiments, and features described above, further aspects, embodiments, and features of the present application will be readily understood by reference to the drawings and the following detailed description.

### BRIEF DESCRIPTION OF THE DRAWINGS

In the drawings, unless otherwise specified, identical reference numerals will be used throughout the drawings to refer to identical or similar parts or elements. The drawings are not necessarily drawn to scale. It should be understood that these drawings depict only some embodiments disclosed in accordance with the present application and are not to be considered as limiting the scope of the present application.
FIG. 1 is a flowchart of a method for invoking an automatic driving reference line according to an embodiment of the present application;
FIG. 2 is a flowchart of a method for invoking an automatic driving reference line according to another embodiment of the present application;
FIG. 3 is a schematic diagram of segmenting a road feasible area according to an embodiment of the present application;
FIG. 4 is a schematic diagram of acquiring an automatic driving reference line of a switching lane in advance according to an embodiment of the present application;
FIG. 5 is a schematic diagram of acquiring lane information by an LRU according to an embodiment of the present application;
FIG. 6 is a block diagram of a device for invoking an automatic driving reference line according to an embodiment of the present application;
FIG. 7 is a block diagram of a device for invoking an automatic driving reference line according to another embodiment of the present application; and
FIG. 8 is a schematic diagram of a terminal apparatus for invoking an automatic driving reference line according to an embodiment of the present application.

### DETAILED DESCRIPTION OF THE EMBODIMENTS

In the following, only certain exemplary embodiments are briefly described. As those skilled in the art would realize, the described embodiments may be modified in various different ways, all without departing from the spirit or scope of the present application. Accordingly, the drawings and description are to be regarded as illustrative in nature and not restrictive.

### Embodiment 1

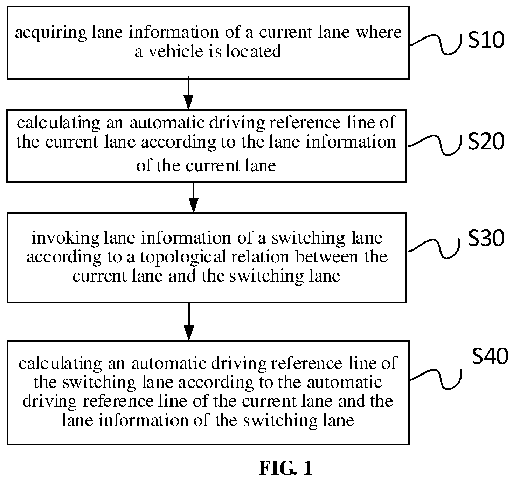

A method for invoking an automatic driving reference line is provided according to an embodiment of the present application, as shown in FIG. 1. The method includes:
S 10: acquiring lane information of a current lane where a vehicle is located;
S20: calculating an automatic driving reference line of the current lane according to the lane information of the current lane;
S30: invoking lane information of a switching lane according to a topological relation between the current lane and the switching lane; and
S40: calculating an automatic driving reference line of the switching lane according to the automatic driving reference line of the current lane and the lane information of the switching lane.

In an example, when the driverless vehicle is travelling on the current lane, the lane information thereof may be acquired in advance according to a navigation result in a road level. The automatic driving reference line of the current lane is calculated according to the lane information of the current lane. The automatic driving reference line of the current lane can be used as a driving route that needs to be referred to by the driverless vehicle before departure. The automatic driving reference line of the current lane can be acquired in advance before starting the driverless vehicle.

When the driverless vehicle is travelling, lane information of a switching lane is acquired according to a topological relation between the current lane and the other lanes. The switching lane is a lane into which the current lane is to be switched. The topological relation between the current lane and the other lanes may be determined according to a road line between parallel lanes, or whether there are turns or roadblocks between the front and rear lanes. The topological relation is basic connectivity information between the lanes, and the basic connectivity information can be used to obtain the lane information of the parallel lanes and the lane information of the next lane. By invoking the lane information of the switching lane, when a plurality of lanes appear in one road segment, all of the switching lanes are constructed by using arrangement and combination. In an example, a road is segmented into a first road segment, a second road segment, and a third road segment. The first road segment includes only one lane that is the current lane on which the driverless vehicle is travelling, and the second road segment includes the first lane and the second lane. The third section only includes one lane, that is, the third lane. Then, there are the following ways to obtain the lane information of the switching lane: Firstly, the lane information of the first lane can be acquired in the current lane, and then the lane information of the third lane can be acquired; secondly, the lane information of the second lane can be acquired in the current lane, and then the lane information of the third lane can be acquired.

After acquiring lane information of all the switching lanes with switching possibility, it is necessary to calculate an automatic driving reference line of a switching lane by using lane information of the switching lane. Before the calculation, the lane information of the switching lane may be acquired through the preset acquiring logic. For example, it can be acquired through the method of Least Recently Used (LRU) memory management. LRU is used for virtual page storage management. After invoking the lane information of the switching lane, the automatic driving reference line of the switching lane may be calculated according to the automatic driving reference line of the current lane and the lane information of the switching lane on the basis of a position of the driverless vehicle in the current lane. For example, when the distance between the driverless vehicle and the switching lane is 500 meters, an automatic driving reference line of a switching lane is calculated and acquired, so that the driverless vehicle enters the switching lane more smoothly from the current lane.

By using the method for invoking an automatic driving reference line according to the embodiment, automatic driving reference lines of all switching lanes can be calculated before switching the current lane, and the automatic driving reference lines of the switching lanes are acquired in an orderly manner, so that an automatic driving vehicle can switch the lane freely with changes of a surrounding traffic flow and an environment in a complicated road network environment.

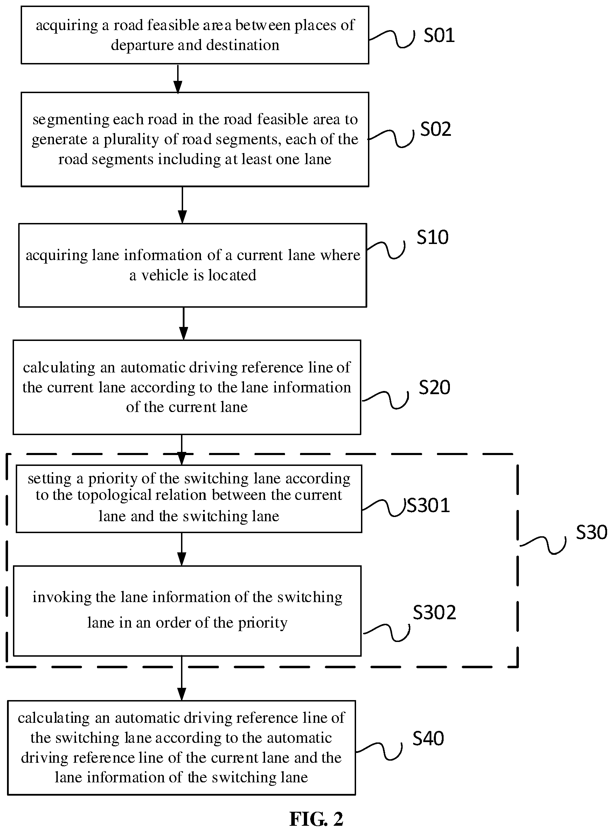

In one embodiment, as shown in FIG. 2, before S10, the method includes:
S01: acquiring a road feasible area between places of departure and destination;
S02: segmenting each road in the road feasible area to generate a plurality of road segments, each of the road segments including at least one lane.

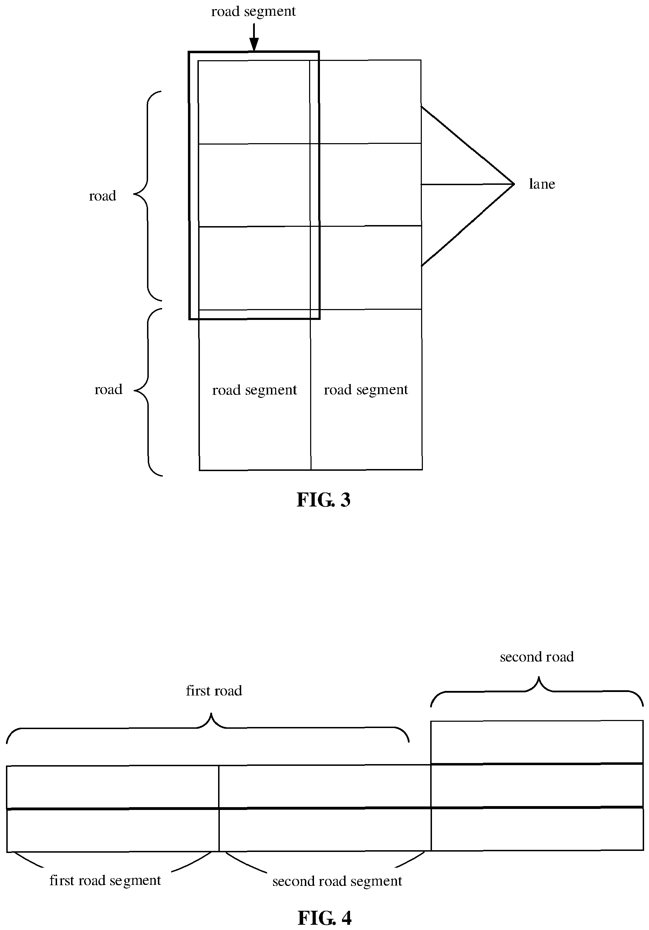

As shown in FIG. 3, the feasible area between places of departure and destination can be obtained from the navigation result acquired by the navigation application. The road feasible area between the places of departure and destination includes multiple roads, for example, Gaoliangqiao Road, Xizhimenwai Road, Shangdi East Road, etc., from Xizhimen to Shangdi. Each road can be segmented into multiple segments in order to reduce calculation amount of one calculation, thereby improving calculation efficiency.

In an example, as shown in FIG. 4, the road feasible area is divided into roads, in which the first road and the second road are selected. The first road is segmented into two segments, including a first road segment and a second road segment, each of which includes two lanes in parallel. The second road includes three lanes in parallel, two of which are connected to the two lanes of the second section in the first road segment, and the third lane of the second road is not connected to the first road and is called as an extended lane or a switching lane.

In one embodiment, as shown in FIG. 2, S30 includes:
S301: setting a priority of the switching lane according to the topological relation between the current lane and the switching lane; and
S302: invoking the lane information of the switching lane in an order of the priority.

In an example, the lane information of the switching lane may be acquired in the manner of the LRU memory management. After the lane information of the switching lane is acquired, the automatic driving reference line of the switching lane is calculated. The calculated automatic driving reference line should be acquired in advance when the vehicle is at a certain distance from the switching lane, so that the lanes can be smoothly and efficiently switched in time.

During acquiring the automatic driving reference line of the switching lane in advance, firstly, the topological relation between the current lane and the other lanes is determined according to an actual road condition. For example, the current lane can be changed in the left and right direction, or enter into a lane of the next road segment through turning from the upper lane, and so on. Thereafter, the priorities are set according to the topological relation. For example, the priority of the switching lane in the left and right direction may be higher than the priority of the lane of the next road segment as the switching lane. The high-priority current lane and the switching lanes in the left-right direction are preferentially placed in the LRU in each calculation cycle, and the other lanes and lane information thereof are placed into the LRU one by one according to the priorities. In order to facilitate the acquisition, the lane information of the current lane and the lane information of the switching lanes in the left and right direction form a work queue according to the priorities, thereby forming a work thread. When the automatic driving reference line of the switching lane is calculated, the lane information of the switching lane that coincides partly with the current lane is first searched in the LRU. Then, the automatic driving reference line of the switching lane is calculated according to the automatic driving reference line of the current lane and the lane information of the switching lane.

The calculated automatic driving reference line of the switching lane should be acquired at a certain distance from the switching lane. As shown in FIG. 4, the driverless vehicle needs to be switched from the first road to the second road, and a portion where the second road and the first road coincide is the second road segment. Currently, the driverless vehicle travels on one of the lanes in the first road segment using the automatic driving reference line of the current lane. In order that the driverless vehicle can smoothly be switched to the second road, the automatic driving reference line of the switching lane should be extracted in the first road segment in time.

In an embodiment, S301 includes:
setting a priority of a lane on either side of the current lane to be higher than a priority of a lane at an end of the current lane.

Since the lane change to either side of the current lane is achieved more conveniently and quickly, the lanes on the both sides of the current lane are set to have a high priority. Since the vehicle often needs a certain time to smoothly change lanes when entering a lane of the next road segment from the current lane, the priorities of lanes at the end of the current lane are set to be lower.

In an embodiment, S302 includes:
if the switching lane comprises the lane on either side of the current lane and the lane at the end of the current lane, first invoking lane information of the lane on either side of the current lane, and then invoking lane information of the lane at the end of the current lane.

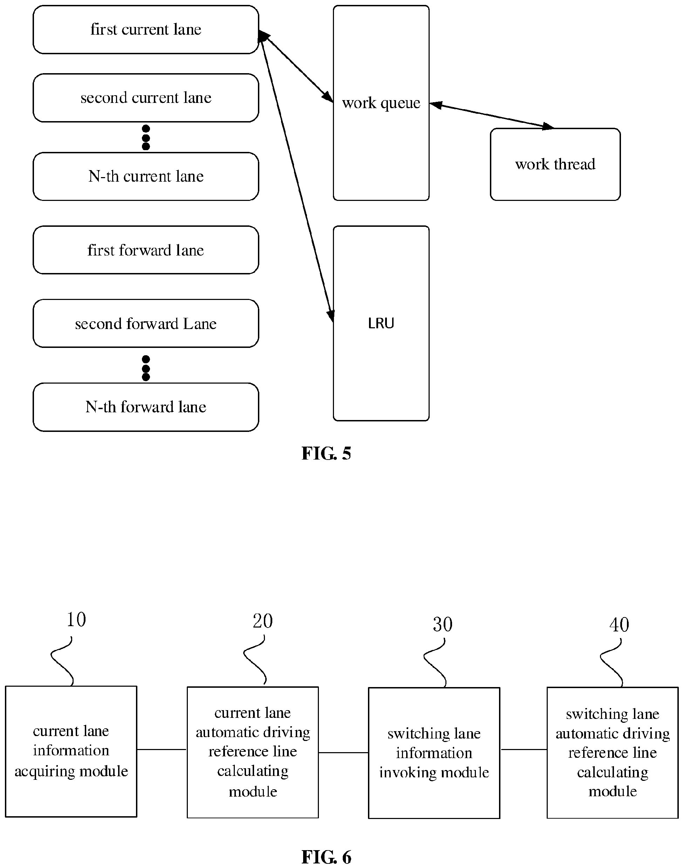

In an example, as shown in FIG. 5, the lanes on the both sides of the current lane may include a first current lane, a second current lane,..., a N-th current lane. The lanes at the end of the current lane may include a first forward lane, a second forward Lane,..., a N-th forward lane. According to the priority order from high to low, the first current lane, the second current lane,..., the N-th current lane are put into the LRU in advance, and the other lanes with lower priorities are put into the LRU again. The lanes can be indexed and stored by the LRU based on a data structure and a keyword. The lanes to be acquired are taken out from the LRU in the priority order to form a work queue, and then a work thread is formed for acquisition.

### Embodiment 2

A device for invoking an automatic driving reference line is provided according to an embodiment of the present application, as shown in FIG. 6. The device includes:
a current lane information acquiring module 10, configured to acquire lane information of a current lane where a vehicle is located;
a current lane automatic driving reference line calculating module 20, configured to calculate an automatic driving reference line of the current lane according to the lane information of the current lane;
a switching lane information invoking module 30, configured to invoke lane information of a switching lane according to a topological relation between the current lane and the switching lane; and
a switching lane automatic driving reference line calculating module 40, configured to calculate an automatic driving reference line of the switching lane according to the automatic driving reference line of the current lane and the lane information of the switching lane.

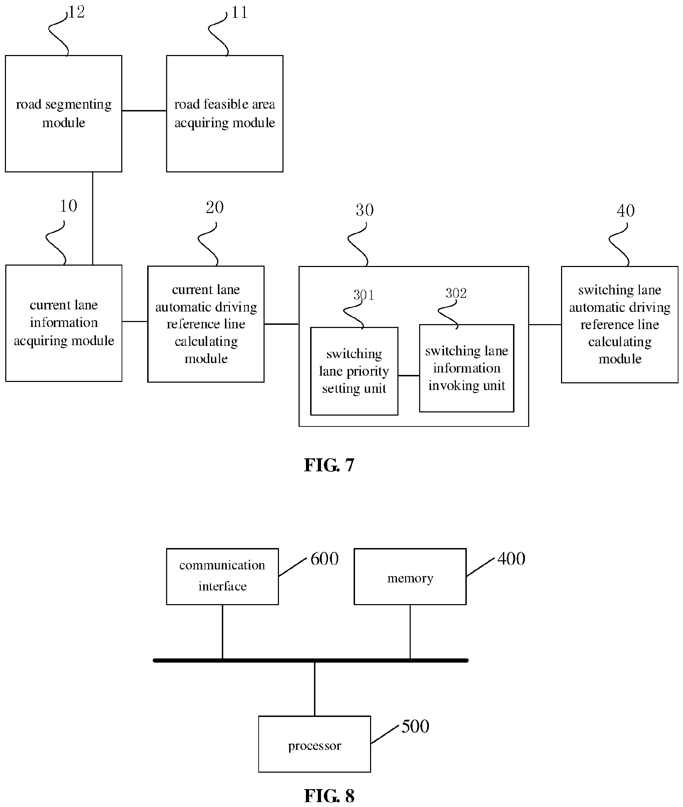

In one embodiment, as shown in FIG. 7, the device further includes:
a road feasible area acquiring module 11, configured to acquire a road feasible area between places of departure and destination; and
a road segmenting module 12, configured to segment each road in the road feasible area to generate a plurality of road segments, each of the road segments including at least one lane.

In one embodiment, as shown in FIG. 7, the switching lane information invoking module 30 includes:
a switching lane priority setting unit 301, configured to set a priority of the switching lane according to the topological relation between the current lane and the switching lane; and
a switching lane information invoking unit 302, configured to acquire lane information of the switching lane in an order of the priority.

In one embodiment, as shown in FIG. 7, the switching lane priority setting unit 301 includes:
a priority setting sub-unit, configured to set a priority of a lane on either side of the current lane to be higher than a priority of a lane at an end of the current lane.

In one embodiment, as shown in FIG. 7, the switching lane information invoking unit 302 includes:
a switching lane information invoking sub-unit, configured to, if the switching lane comprises the lane on either side of the current lane and the lane at the end of the current lane, first invoke lane information of the lane on either side of the current lane, and then invoke lane information of the lane at the end of the current lane.

### Embodiment 3

A terminal apparatus for invoking an automatic driving reference line is provided according to an embodiment of the present application, as shown in FIG. 8. The terminal apparatus includes a memory 400 and a processor 500. The memory 400 stores a computer program executable on the processor 500. When the processor 500 executes the computer program, the method in the foregoing embodiment is implemented. The number of the memory 400 and the processor 500 may be one or more.

The terminal apparatus further includes:
a communication interface 600 configured to communicate with an external device and exchange data.

The memory 400 may include a high-speed RAM memory and may also include a non-volatile memory, such as at least one magnetic disk memory.

If the memory 400, the processor 500, and the communication interface 600 are implemented independently, the memory 400, the processor 500, and the communication interface 600 may be connected to each other through a bus and communicate with one another. The bus may be an Industry Standard Architecture (ISA) bus, a Peripheral Component Interconnect (PCI) bus, an Extended Industry Standard Component (EISA) bus, or the like. The bus may be divided into an address bus, a data bus, a control bus, and the like. For ease of illustration, only one bold line is shown in Figure 8, but it does not mean that there is only one bus or one type of bus.

Optionally, in a specific implementation, if the memory 400, the processor 500, and the communication interface 600 are integrated on one chip, the memory 400, the processor 500, and the communication interface 600 may implement mutual communication through an internal interface.

### Embodiment 4

According to an embodiment of the present application, a computer-readable storage medium is provided for storing computer software instructions, which include programs involved in execution of the above method for invoking an automatic driving reference line.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the present application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "a plurality of" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present application includes additional implementations where the functions may not be performed in the order shown or discussed, including according to the functions involved, in substantially simultaneous or in reverse order, which should be understood by those skilled in the art to which the embodiment of the present application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood that various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

## Claims

1. A method for invoking an automatic driving reference line, comprising:
acquiring (S10) lane information of a current lane where a vehicle is located;
calculating (S20) an automatic driving reference line of the current lane according to the lane information of the current lane;
invoking (S30) lane information of a switching lane according to a topological relation between the current lane and the switching lane; and
calculating (S40) an automatic driving reference line of the switching lane according to the automatic driving reference line of the current lane and the lane information of the switching lane.

2. The method according to claim 1, wherein before acquiring (S10) lane information of a current lane where a vehicle is located, the method further comprises:
acquiring (S01) a road feasible area between places of departure and destination; and
segmenting (S02) each road in the road feasible area to generate a plurality of road segments, each of the road segments comprising at least one lane.

3. The method according to claim 1, wherein the invoking (S30) lane information of a switching lane according to a topological relation between the current lane and the switching lane comprises:
setting (S301) a priority of the switching lane according to the topological relation between the current lane and the switching lane; and
invoking (S302) the lane information of the switching lane in an order of the priority.

4. The method according to claim 3, wherein the setting (S301) a priority of the switching lane according to a topological relation between the current lane and the switching lane comprises:
setting a priority of a lane on either side of the current lane to be higher than a priority of a lane at an end of the current lane.

5. The method according to claim 4, wherein the invoking (S302) the lane information of the switching lane in an order of the priority comprises:
if the switching lane comprises the lane on either side of the current lane and the lane at the end of the current lane, first invoking lane information of the lane on either side of the current lane, and then invoking lane information of the lane at the end of the current lane.

6. A device for invoking an automatic driving reference line, comprising:
a current lane information acquiring module (10), configured to acquire lane information of a current lane where a vehicle is located;
a current lane automatic driving reference line calculating module (20), configured to calculate an automatic driving reference line of the current lane according to the lane information of the current lane;
a switching lane information invoking module (30), configured to invoke lane information of a switching lane according to a topological relation between the current lane and the switching lane; and
a switching lane automatic driving reference line calculating module (40), configured to calculate an automatic driving reference line of the switching lane according to the automatic driving reference line of the current lane and the lane information of the switching lane.

7. The device according to claim 6, further comprising:
a road feasible area acquiring module (11), configured to acquire a road feasible area between places of departure and destination;
a road segmenting module (12), configured to segment each road in the road feasible area to generate a plurality of road segments, each of the road segments comprising at least one lane.

8. The device according to claim 6, wherein the switching lane information invoking module (30) comprises:
a switching lane priority setting unit (301), configured to set a priority of the switching lane according to the topological relation between the current lane and the switching lane; and
a switching lane information invoking unit (302), configured to invoke the lane information of the switching lane in an order of the priority.

9. The device according to claim 8, wherein the switching lane priority setting unit (301) comprises:
a priority setting sub-unit, configured to set a priority of a lane on either side of the current lane to be higher than a priority of a lane at an end of the current lane.

10. The device according to claim 9, wherein the switching lane information invoking unit (302) comprises:
a switching lane information invoking sub-unit, configured to, if the switching lane comprises the lane on either side of the current lane and the lane at the end of the current lane, first invoke lane information of the lane on either side of the current lane, and then invoke lane information of the lane at the end of the current lane.

11. A terminal apparatus for invoking an automatic driving reference line, comprising:
one or more processors (500); and
a storage device (400) configured to store one or more programs, wherein
the one or more programs, when executed by the one or more processors (500), cause the one or more processors (500) to implement the method of any one of claims 1 to 5.

12. A computer-readable storage medium comprising computer executable instructions stored thereon, wherein the executable instructions, when executed by a processor, causes the processor to implement the method of any one of claims 1 to 5.

13. A computer program product comprising computer executable instructions stored thereon, wherein the executable instructions, when executed by a processor, causes the processor to implement the method of any one of claims 1 to 5.
